# EUROPÄISCHE PATENTSCHRIFT

(11) **EP 1 856 555 B1**
(45) Veröffentlichungstag und Bekanntmachung des Hinweises auf die Patenterteilung: **11.07.2012**
(21) Anmeldenummer: 06708115.8
(22) Anmeldetag: 08.02.2006
(51) Int. Cl.: G01S 13/93, G01S 13/536, G01S 13/58, G01S 13/34

(54) **RADARSYSTEM FÜR KRAFTFAHRZEUGE MIT AUTOMATISCHER PRECRASH-CW-FUNKTION**
MOTOR VEHICLE RADAR SYSTEM PROVIDED WITH AN AUTOMATIC FUNCTION FOR MEASURING PRE-CRASH SPEED
SYSTEME DE RADAR POUR VEHICULES AUTOMOBILES PRESENTANT UNE FONCTION AUTOMATIQUE MODE DE MESURE DE VITESSE DE PRE-COLLISION

(30) Priorität: 25.02.2005 DE 102005008715
(43) Veröffentlichungstag der Anmeldung: 21.11.2007
(73) Patentinhaber: ROBERT BOSCH GMBH, 70442 Stuttgart (DE)
(72) Erfinder: HILSEBECHER, Joerg, 70839 Gerlingen (DE); OLBRICH, Herbert, 71277 Rutesheim (DE); SOHNKE, Thorsten, 65835 Liederbach (DE); KUTTENBERGER, Alfred, 71696 Moeglingen (DE); THEISEN, Marc, 74354 Besigheim (DE); RANDLER, Martin, 88090 Immenstaad (DE); BUNSE, Michael, 71665 Vaihingen/Enz (DE)
(86) Internationale Anmeldenummer: PCT/EP2006/050769
(87) Internationale Veröffentlichungsnummer: WO 2006/089841

(56) Entgegenhaltungen:
- WO-A-2004/061471
- WO-A2-2004/053520
- DE-A1- 10 350 553
- DE-A1- 19 963 005
- US-A- 5 872 536

## Beschreibung

### Stand der Technik

Die Erfindung betrifft ein Radarsystem für Kraftfahrzeuge, mit einem Radarsensor und einer Auswerteeinrichtung zur Messung von Abständen und Relativgeschwindigkeiten von Objekten in der Umgebung des Fahrzeugs, und einer Kollisionserkennungseinrichtung, die anhand der gemessenen Abstände und Relativgeschwindigkeiten eine bevorstehende Kollision erkennt und Daten über den voraussichtlichen Kollisionszeitpunkt und die Aufprallgeschwindigkeit an ein Pre-Crash-System liefert.

Ein solches Radarsystem wird typischerweise in Verbindung mit einem adaptiven Geschwindigkeitsregler (ACC; Adaptive Cruise Control) eingesetzt, der die Geschwindigkeit des eigenen Fahrzeugs automatisch an die Geschwindigkeit eines vorausfahrenden Fahrzeugs anpasst, so dass dieses in einem geeigneten Sicherheitsabstand verfolgt wird.

Bei einem für diese Zwecke gebräuchlichen FMCW-Radar (Frequency Modulated Continuous Wave) wird die Frequenz des gesendeten Radarsignals periodisch mit unterschiedlichen Rampensteigungen moduliert, und das von einem oder mehreren Objekten reflektierte Radarsignal wird mit dem gesendeten Signal gemischt, so dass man ein Zwischenfrequenzsignal erhält, dessen Frequenz dem Frequenzunterschied zwischen dem gesendeten und dem empfangenen Signal entspricht.

Durch einen geeigneten Algorithmus, beispielsweise schnelle Fourier-Transformation (FFT), wird in jedem Messzyklus ein Spektrum des Zwischenfrequenzsignals aufgenommen. In diesem Spektrum zeichnet sich jedes geortete Objekt durch einen Peak bei einer bestimmten Frequenz ab. Die Frequenz, bei der sich der Peak befindet, ist einerseits von der Rampensteigung und vom Objektabstand und andererseits von der Relativgeschwindigkeit des Objekts abhängig.

Durch Vergleich der zu demselben Objekt gehörenden Peaks, die bei zwei verschiedenen Rampensteigungen gemessen wurden, lassen sich die abstands- und geschwindigkeitsabhängigen Frequenzanteile separieren, so dass man Messdaten für den Abstand und die Relativgeschwindigkeit des Objekts erhält. Dabei wird allerdings idealisierend vorausgesetzt, dass die Relativgeschwindigkeit während der Dauer der beiden Rampen praktisch unverändert bleibt.

Durch Auswertung mindestens einer weiteren Frequenzrampe lassen im Fall mehrerer Objekte Mehrdeutigkeiten bei der Zuordnung der Peaks zu den Objekten eliminieren.

Da diese Auswerteprozedur relativ rechenaufwendig ist, wird für einen einzelnen Messzyklus eine gewisse Mindestdauer benötigt, so dass nur eine begrenzte Genauigkeit und zeitliche Auflösung der erhaltenen Messdaten erreichbar ist.

Weiterhin sind so genannte Pre-Crash-Systeme bekannt, die dazu dienen, passive reversible Sicherheitssysteme des Fahrzeugs wie beispielsweise reversible Airbags, Gurtstraffer und dergleichen vor einem bevorstehenden Aufprall rechtzeitig zu aktivieren, wenn die Kollisionseinrichtung anhand der Radardaten eine Situation erkennt, in der eine Kollision nicht mehr abwendbar ist. Außerdem sind Pre-Crash-Systeme bekannt, die u. a. dazu dienen, einen optimalen Zündzeitpunkt für z. B. einen pyrotechnischen Airbag oder Gurtstraffer zu bestimmen. Dazu ist eine möglichst genaue Kenntnis des voraussichtlichen Kollisionszeitpunkts und auch eine möglichst genaue Kenntnis der Relativgeschwindigkeit zum Kollisionszeitpunkt, also der Aufprallgeschwindigkeit, erforderlich.

Aus WO 2004/061471 A1 ist ein Verfahren zur Auswertung eines Impulsradars bekannt, das eine Umschaltung zwischen Abstands- und Geschwindigkeitsmessung erlaubt.

US-A-5 872 536 beschreibt en Mehrsensor-System mit einer Kollisionserkennungseinrichtung.

### Vorteile der Erfindung

Die Erfindung mit den in Anspruch 1 angegebenen Merkmalen bietet den Vorteil, dass sie eine genauere Bestimmung der Aufprallgeschwindigkeit allein mit hilfe eines üblichen FMCW-Radars ermoglicht, so dass die Funktion des Pre-Crash-Systems im Hinblick auf die Aufprallgeschwindigkeit optimiert werden kann.

Die Erfindung beruht auf der Überlegung, dass die oben beschriebene Art der Auswertung der Radarsignale im Fall einer nicht mehr abwendbaren Kollision nicht optimal ist. Zum einen sind in dieser Situation ohnehin nur die Ortungsdaten des Kollisionsobjekts relevant, so dass es nicht sinnvoll ist, die Daten der übrigen Objekte weiter zu verfolgen. Zum anderen ist der Radarsensor, typischerweise ein LRR (Long Range Radar), für die Messung von relativ großen Objektabständen ausgelegt, die nicht wesentlich kleiner sind als die in einer normalen Verkehrssituation auftretenden Sicherheitsabstände. Bei fortschreitender Annäherung an das Kollisionsobjekt werden die Abstandsdaten daher zunehmend unzuverlässiger und letztlich unbrauchbar. Des Weiteren ist davon auszugehen, dass kurz vor einer Kollision die Relativgeschwindigkeit einer hohen Dynamik unterliegt, weil das eigene Fahrzeug in der Regel stark abgebremst wird. Die Voraussetzung, dass die Relativgeschwindigkeit des Objekts während zweier aufeinander folgender Frequenzrampen im Wesentlichen gleich bleibt, ist deshalb nicht mehr uneingeschränkt erfüllt, so dass auch die Genauigkeit der Geschwindigkeitsmessung beeinträchtigt wird.

Erfindungsgemäß wird deshalb im Fall einer bevorstehenden Kollision auf einen anderen Messmodus umgeschaltet, der gezielt auf eine genauere Messung der Relativgeschwindigkeit ausgelegt ist. Dabei ist es möglich, die Auswertung auf das Kollisionsobjekt zu beschränken und auch auf die Erhebung von Abstandsdaten zu verzichten, so dass sich die Auswerteprozedur erheblich vereinfacht und die Zykluszeit entsprechend verkürzt werden kann und somit bei der Geschwindigkeitsmessung eine höhere zeitliche Auflösung erreicht wird. Auf diese Weise ist es möglich, die Relativgeschwindigkeit des Kollisionsobjekts genauer zu messen und nahezu bis zum Kollisionszeitpunkt zu verfolgen, so dass der während des regulären Messmodus des Radarsensors gewonnene Schätzwert für die Aufprallgeschwindigkeit korrigiert und präzisiert werden kann.

Im Geschwindigkeitsmessmodus wird auf eine Frequenzmodulation des gesendeten Radarsignals verzichtet, und es erfolgt eine reine Dopplermessung der Relativgeschwindigkeit des Kollisionsobjekts. Hierdurch wird die Auswertung erheblich vereinfacht und eine beträchtliche Verringerung der Zykluszeit bei hoher Genauigkeit der Relativgeschwindigkeitsmessung erreicht.

Vorteilhafte Ausgestaltungen und Weiterbildungen der Erfindung ergeben sich aus den Unteransprüchen.

Durch Integration der im Geschwindigkeitsmessmodus aufgenommenen Relativgeschwindigkeitsdaten kann auch die zeitliche Änderung des Abstands weiter verfolgt werden, so dass auch der Schätzwert für den Kollisionszeitpunkt weiter verbessert werden kann.

### Zeichnung

Ein Ausführungsbeispiel der Erfindung ist in den Zeichnungen
dargestellt und in der nachfolgenden Beschreibung näher erläutert.

Es zeigen:
- Fig. 1: ein Blockdiagramm eines erfindungsgemäßen Radarsystems;
- Fig. 2: ein Frequenz/Zeit-Diagramm eines gesendeten Radarsignals; und
- Fig. 3 und 4: ein Geschwindigkeits- und ein Abstands-Zeitdiagramm zur Erläuterung der Arbeitsweise des Radarsystems.

### Beschreibung des Ausführungsbeispiels

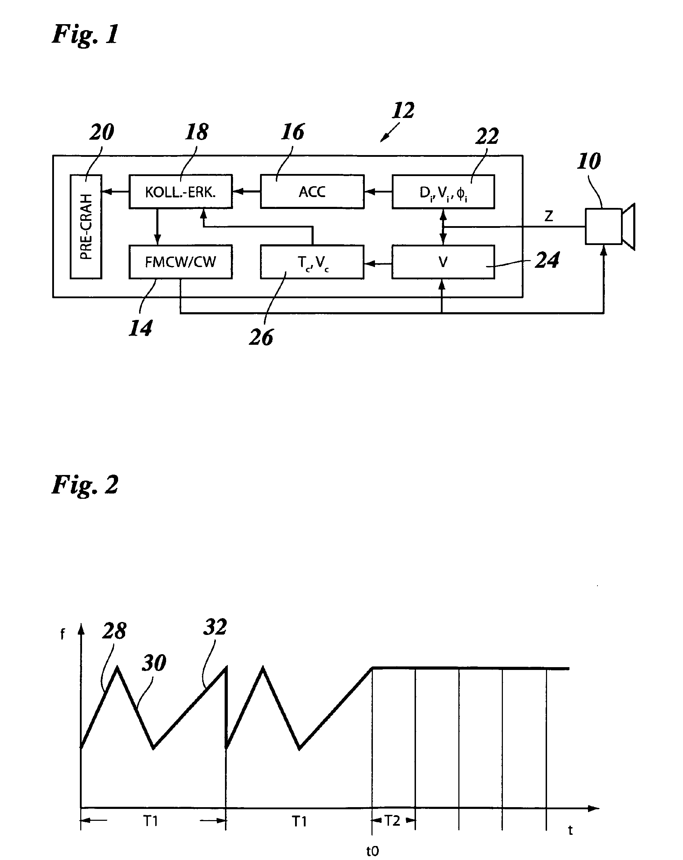

Das in Fig. 1 gezeigte Radarsystem umfasst einen vorn im Kraftfahrzeug eingebauten Radarsensor 10, beispielsweise ein 77 GHz Long-Range-Radar, und eine zugehörige elektronische Auswerteeinrichtung 12, die beispielsweise durch einen oder mehrere Mikroprozessoren, zugehörige Programm- und Datenspeicher und dergleichen gebildet wird. Die Auswerteeinrichtung 12 enthält auch einen Treiber 14 zur Ansteuerung des Radarsensors 10. Dieser Treiber ist hier zwischen zwei Betriebsmodi FMCW und CW umschaltbar, wie später noch näher erläutert werden wird. Weitere Komponenten der Auswerteeinrichtung 12 sind im gezeigten Beispiel ein ACC-Modul 16, eine Kollisionserkennungseinrichtung 18 und ein Pre-Crash-System 20.

Im Normalbetrieb ist das ACC-Modul aktiv, und der Radarsensor 10 wird im Modus FMCW betrieben. Im Radarsensor 10 wird in bekannter Weise das gesendete Radarsignal mit dem an verschiedenen Objekten, beispielsweise an vorausfahrenden Fahrzeugen, reflektierten und vom Radarsensor empfangenen Radarsignal zu einem Zwischenfrequenzsignal Z gemischt, das in einer Verarbeitungsstufe 22 ausgewertet wird, um die Abstände Dᵢ und Relativgeschwindigkeiten Vᵢ der georteten Objekte zu bestimmen. Typischerweise hat der Radarsensor 10 auch ein gewisses Winkelauflösungsvermögen, und er liefert Zwischenfrequenzsignale Z für mehrere Kanäle, die sich in ihrer Sende- und Empfangsrichtung unterscheiden, so dass durch Auswertung der Zwischenfrequenzsignale aus den verschiedenen Kanälen auch der Azimutwinkel Φᵢ der georteten Objekte bestimmt werden kann. Anhand dieser Daten erkennt das ACC-Modul 16, welche Objekte sich auf derselben Fahrbahn wie das eigene Fahrzeug befinden, und es wählt dasjenige dieser Objekte, das dem eigenen Fahrzeug am nächsten ist, als Zielobjekt für eine automatische Abstandsregelung aus. Durch Eingriff in das Antriebssystem und erforderlichenfalls auch in das Bremssystem des Fahrzeugs regelt das ACC-Modul 16 die Geschwindigkeit des eigenen Fahrzeugs so, dass das Zielobjekt in einem angemessenen Sicherheitsabstand verfolgt wird.

Die Kollisionserkennungseinrichtung 18 verfolgt die Abstands- und Relativgeschwindigkeitsdaten des Zielobjekts und entscheidet anhand des bekannten maximalen Verzögerungsvermögens des eigenen Fahrzeugs, ob sich eine Kollision mit dem Zielobjekt vermeiden lässt oder nicht. Wenn eine Kollision nicht mehr zu vermeiden ist, beispielsweise weil das Zielobjekt in einen Unfall verwickelt wurde und plötzlich zum Stillstand gekommen ist, gibt die Kollisionserkennungseinrichtung 18 eine Kollisionswarnung an den Fahrer aus. Je nach Ausführungsform kann wahlweise auch automatisch eine Notbremsung eingeleitet werden. Außerdem berechnet die Kollisionserkennungseinrichtung durch Extrapolation der Abstands- und Relativgeschwindigkeitsdaten unter Berücksichtigung der voraussichtlichen Verzögerung des eigenen Fahrzeugs den voraussichtlichen Kollisionszeitpunkt sowie die Aufprallgeschwindigkeit, d.h., die Relativgeschwindigkeit zum Kollisionszeitpunkt. Diese Daten werden an das Pre-Crash-System 20 ausgegeben, das auf dieser Grundlage beispielsweise die Aktivierungsentscheidung für die reversiblen Rückhaltemittel trifft bzw. zusammen mit den Beschleunigungsdaten nach dem Kontakt mit dem Kollisionsobjekt die optimalen Zündzeitpunkte für Airbagsysteme des Fahrzeugs berechnet, um die Fahrzeuginsassen möglichst wirkungsvoll vor den Kollisionsfolgen zu schützen.

Die Kollisionserkennungseinrichtung 18 kann zwar auch nach der Erkennung einer Situation, in der eine Kollision unvermeidlich ist, die Abstands- und Relativgeschwindigkeitsdaten des Zielobjekts weiter verfolgen, um genauere Vorhersagewerte für den Kollisionszeitpunkt und die Aufprallgeschwindigkeit zu erhalten, doch ist dies ab einem bestimmten Zeitpunkt nicht mehr sinnvoll, weil die Abstandsdaten mit abnehmendem Abstand des Kollisionsobjekts immer unsicherer werden und auch die zeitliche Auflösung bei der Verfolgung der Relativgeschwindigkeitsdaten zu grob ist.

Zu einem geeigneten Zeitpunkt gibt deshalb die
Kollisionserkennungseinrichtung 18 ein Umschaltsignal an den Treiber 14 aus, der daraufhin den Radarsensor 10 in einen Geschwindigkeitsmessmodus CW umschaltet, um eine genauere und zeitlich höher aufgelöste Messung der Relativgeschwindigkeit zu ermöglichen. Die Auswertung des Zwischenfrequenzsignals Z erfolgt dann nicht mehr durch die Verarbeitungsstufe 22, sondern durch eine Verarbeitungsstufe 24, in der ausschließlich die Relativgeschwindigkeit des Kollisionsobjekts bestimmt wird. Auf diese Weise lässt sich die Änderung der Relativgeschwindigkeit mit hoher zeitlicher Auflösung und hoher Genauigkeit weiter verfolgen, so dass in einem Berechnungsmodul 26 genauere Vorhersagewerte für den Kollisionszeitpunkt T_{c} und die Aufprallgeschwindigkeit V_{c} berechnet und über die Kollisionserkennungseinrichtung 18 an das Pre-Crash-System 20 ausgegeben werden können.

Die Arbeitsweise der Verarbeitungsstufen 22 und 24 soll nun anhand von Fig. 2 näher erläutert werden. Fig. 2 illustriert die zeitliche Änderung der Frequenz f des vom Radarsensor 10 gesendeten Radarsignals. Solange sich der Radarsensor im FMCW-Modus befindet, ist diese Frequenz rampenförmig moduliert, mit einer steigenden Rampe 28, einer symmetrisch dazu fallenden Rampe 30 und einer flacher ansteigenden Rampe 32.

Jeweils nach einer Zykluszeit T1 wird dieses Modulationsmuster periodisch wiederholt. Die Frequenz des Zwischenfrequenzsignals Z entspricht jeweils der Differenz zwischen der gesendeten und der empfangenen Frequenz. Innerhalb jeder der drei Rampen 28, 30, 32 wird das Zwischenfrequenzsignal Z während einer bestimmten Sample-Periode digitalisiert und in seinem zeitlichen Verlauf aufgezeichnet, und durch schnelle Fouriertransformation (FFT) wird das Frequenzspektrum gebildet. Jedes Objekt, das sich im Ortungsbereich des Radarsensors 10 befindet, zeichnet sich in diesem Spektrum durch einen Peak (Frequenzmaximum) bei einer bestimmten Frequenz ab. Aufgrund der Modulation der gesendeten Frequenz f setzt sich die Frequenz, bei der der Peak für ein bestimmtes Objekt liegt, aditiv zusammen aus einer relativgeschwindigkeitsabhängigen Komponente, die für alle Rampen gleich ist, und eine abstandsabhängigen Komponente, die proportional zum Abstand des Objekts und zur Rampensteigung ist. Da die Steigungen der Rampen 28, 30 entgegengesetzt gleich sind, heben sich die abstandsabhängigen Komponenten gegenseitig auf, wenn man die Frequenzen der für dasselbe Objekt auf den beiden Rampen erhaltenen Peaks addiert. Aus der Summe lässt sich dann die Relativgeschwindigkeit des Objekts berechnen. Bildet man dagegen die Differenz der Frequenzen der beiden Peaks, so wird die geschwindigkeitsabhängige Komponente eliminiert, und aus der erhaltenen Differenz lässt sich der Abstand des Objekts berechnen.

Die oben beschriebene Separation der abstandsabhängigen und der geschwindigkeitsabhängigen Komponente beruht auf der Annahme, dass sich die Relativgeschwindigkeit des Objekts während der Dauer der Rampen 28, 30 praktisch nicht ändert. Im Fall einer Vollbremsung des eigenen Fahrzeugs, wie sie typischerweise vor einer Kollision stattfindet, ist diese Annahme allerdings nicht oder nur eingeschränkt gerechtfertigt.

Wenn mehrere Objekte gleichzeitig geortet werden, setzt die oben beschriebene Prozedur außerdem voraus, dass bekannt ist, welcher Peak zu welchem Objekt gehört und wie die auf verschiedenen Rampen erhaltenen Peaks zusammengehören. Diese Information lässt sich durch Auswertung der Lage der Peaks auf der dritten Rampe 32 gewinnen. Die dazu benötigte Prozedur ist als solche bekannt und soll hier nicht näher erörtert werden. Sie ist hier nur insofern von Interesse, als sie zu einer nicht unbeträchtlichen Erhöhung des Rechenaufwands führt. Entsprechendes gilt auch für die Bestimmung der Azimutwinkel Φi, die hier ebenfalls nicht näher erörtert werden soll.

All die oben beschriebenen Verarbeitungsprozeduren müssen jeweils innerhalb der Zykluszeit T1 abgeschlossen werden. Hieraus folgt, dass die Zykluszeit nicht beliebig verringert und somit die zeitliche Auflösung der Messungen nicht beliebig gesteigert werden kann.

Im Fall einer bevorstehenden Kollision mit einem Hindernis, dem Kollisionsobjekt, wird das empfangene Radarecho überwiegend oder praktisch ausschließlich von dem Kollisionsobjekt stammen. Mit fortschreitender Annäherung an das Kollisionsobjekt geht die abstandsabhängige Frequenzkomponente gegen 0. Da jedoch zur Messung dieser Frequenzkomponente nur eine begrenzte Messzeit zur Verfügung steht, nimmt die Genauigkeit der Frequenzmessung und damit die Genauigkeit der Abstandsbestimmung ab. Andererseits nimmt die Amplitude des vom Kollisionsobjekt empfangenen Radarechos mit abnehmendem Abstand erheblich zu, und all die übrigen Objekte werden zunehmend abgeschattet, so dass das empfangene Radarsignal praktisch nur noch aus dem Signal des Kollisionsobjekts besteht.

Zu einem geeigneten Zeitpunkt t0 veranlasst deshalb die Kollisionserkennungseinrichtung 18 den Treiber 14, den Radarsensor 10 in den Geschwindigkeitsmessmodus CW umzuschalten. In diesem Modus wird die gesendete Frequenz f nicht mehr moduliert, sondern konstant gehalten. Das heißt, der Radarsensor wird nun als reines Dopplerradar betrieben. Die Auswertung des Zwischenfrequenzsignals Z, dessen Frequenz nun der Dopplerverschiebung des Signals vom Kollisionsobjekt entspricht, erfolgt in der Verarbeitungsstufe 24. Da innerhalb eines einzelnen Messzyklus nicht mehr mehrere Frequenzrampen moduliert zu werden brauchen, kann die Zykluszeit deutlich verkürzt werden (auf T2). Außerdem vereinfacht sich der Rechenaufwand bei der Auswertung des Zwischenfrequenzsignals, da keine Abstandsberechnung mehr erfolgt und nicht mehr zwischen verschiedenen Objekten differenziert werden muss.

Beispielsweise beträgt die Messdauer innerhalb eines einzelnen Messzyklus in diesem Fall nur noch etwa 2,2 ms, und unter Berücksichtigung der Rechenzeit für die Auswertung lässt sich die Zykluszeit auf weniger als 10 ms reduzieren, so dass die zeitliche Entwicklung der Relativgeschwindigkeit nur mit hoher Auflösung verfolgt werden kann. Dabei können innerhalb der Messzeit von 2,2 ms beispielsweise 1024 Sample-Zyklen durchgeführt werden, jeweils mit einer Dauer von etwa 2,2 µs, und durch Bestimmung der Dopplerfrequenz (durch FFT) lässt sich die Relativgeschwindigkeit mit einem Fehler von weniger als 0,06 m/s bestimmen. Der Messbereich beträgt dabei beispielsweise 0,2 bis 60 m/s, und die Geschwindigkeitsmessung kann bis zu beliebig kleinen Objektabständen, also praktisch bis zum Kollisionszeitpunkt fortgeführt werden, so dass die letzte Geschwindigkeitsmessung weniger als 10 ms vor der Kollision erfolgt. Auf diese Weise lässt sich die Aufprallgeschwindigkeit äußerst präzise bestimmen, so dass das Pre-Crash-System 20 entsprechend konfiguriert werden kann.

Wenn die Auswertung in den verschiedenen, unterschiedlichen Sende- und Empfangsrichtungen zugeordneten Kanälen parallel erfolgt, lässt sich anhand der Amplitudenverhältnisse nach wie vor eine Richtungsinformation gewinnen, die es gestattet, den voraussichtlichen Aufprallort zu lokalisieren. Die anhand des Dopplereffekts gemessene Relativgeschwindigkeit ist die Relativgeschwindigkeit längs des Sehstrahls vom Radarsensor zum Reflexionszentrum am Kollisionsobjekt. Die Richtung dieses Sehstrahls kann jedoch bei einem nicht zentralen Aufprall und bei kleinen Abständen erheblich von der tatsächlichen Aufprallrichtung abweichen, so dass auch die gemessene Relativgeschwindigkeit von der wirklichen Aufprallgeschwindigkeit abweicht. Anhand der Richtungsinformation lässt sich diese Abweichung rechnerisch korrigieren.

Wenn andererseits, etwa bei einem zentralen Aufprall, auf die Auswertung der Richtungsinformation verzichtet wird, lassen sich die zur Verfügung stehenden Kanäle für eine entsprechend häufigere Berechnung der Relativgeschwindigkeit nutzen, so dass die Zykluszeit weiter verkürzt und damit die Auflösung weiter verbessert werden kann.

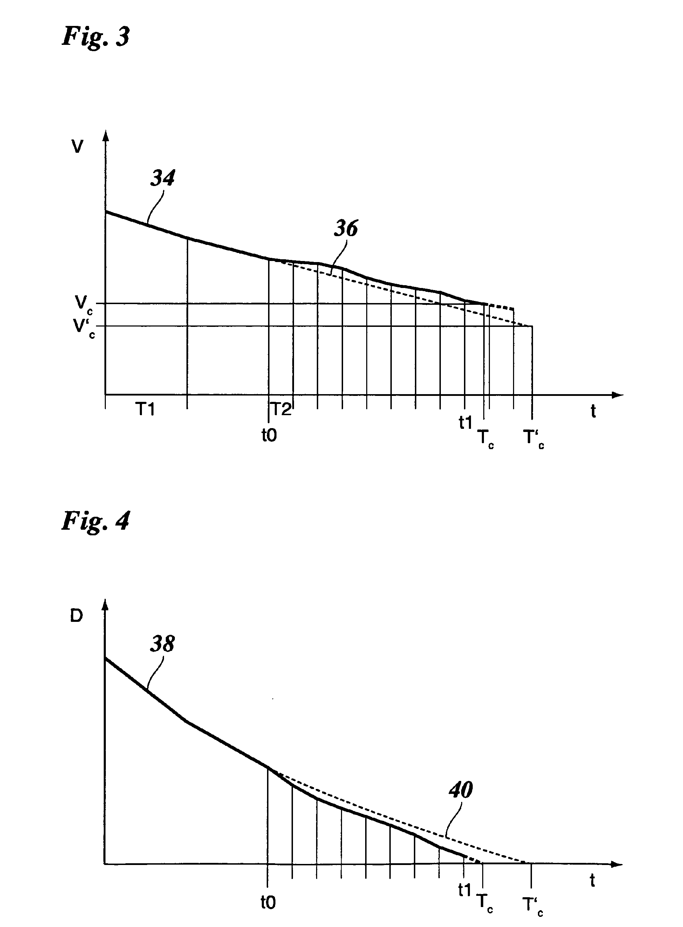

In Figuren 3 und 4 ist an einem Beispiel dargestellt, wie die zeitliche Entwicklung der Relativgeschwindigkeit V und des Abstands D zum Kollisionsobjekt verfolgt wird. Als Beispiel soll angenommen werden, dass das eigene Fahrzeug auf ein stehendes Hindernis auffährt, so dass die Relativgeschwindigkeit V (Figur 3) hier dem Betrage nach der Absolutgeschwindigkeit des eigenen Fahrzeugs entspricht. Bis zum Zeitpunkt t0 wird diese Relativgeschwindigkeit V mit Hilfe der Verarbeitungsstufe 22 in Intervallen bestimmt, die der Zykluszeit T1 entsprechen. Die durch die Kurve 34 in Figur 2 dargestellte Abnahme der Geschwindigkeit entspricht der durch den Fahrer oder automatisch durch die Kollisionserkennungseinrichtung 18 ausgelösten Verzögerung des eigenen Fahrzeugs. Anhand des ungefähr bekannten Verzögerungsvermögens des Fahrzeugs lässt sich diese Kurve in die Zukunft extrapolieren, wie in Figur 3 durch eine gestrichelte Linie 36 angedeutet wird. In der Praxis ist diese Extrapolation allerdings mit erheblichen Unsicherheiten behaftet, weil die tatsächliche Verzögerung des eigenen Fahrzeugs durch verschiedene Faktoren beeinflusst werden kann, beispielsweise durch den Fahrbahnzustand bei eisglatter Fahrbahn, und weil im allgemeinen Fall, bei Aufprall auf ein nicht stehendes Hindernis, die Relativgeschwindigkeit auch von der nicht vorhersagbaren Änderung der Absolutgeschwindigkeit des Kollisionsobjekts abhängig ist.

Die Kurve 38 in Figur 4 illustriert den entsprechenden zeitlichen Verlauf des Abstands D, der bis zum Zeitpunkt t0 direkt gemessen werden kann und danach durch Integration der extrapolierten Relativgeschwindigkeit (Kurve 36) abgeschätzt werden kann, wie durch die gestrichelte Linie 40 in Figur 4 angedeutet wird. Der Schnittpunkt dieser Linie 40 mit der t-Achse (D = 0) liefert einen Schätzwert T'_{c} für den Kollisionszeitpunkt. Anhand der Kurve 36 in Figur 3 lässt sich dann ein entsprechender Schätzwert V'_{c} für die Aufprallgeschwindigkeit ablesen.

Ab dem Zeitpunkt t0 ist der Radarsensor 10 im
Geschwindigkeitsmessmodus, und die Relativgeschwindigkeit V wird nun genauer und mit höherer Auflösung gemessen, entsprechend der kleineren Zykluszeit T2. Wie der Verlauf der in Figur 3 fett eingezeichneten Kurve 34 zeigt, fällt in diesem Beispiel die Abnahme der Relativgeschwindigkeit V geringer aus als erwartet, so dass die tatsächliche Relativgeschwindigkeit größer bleibt als die extrapolierte Geschwindigkeit, die durch die Kurve 36 angegeben wird. Der tatsächliche Verlauf der Relativgeschwindigkeit lässt sich nun mit hoher zeitlicher Auflösung praktisch bis zum tatsächlichen Kollisionszeitpunkt T_{c} verfolgen. Die letzte Geschwindigkeitsmessung erfolgt zu einem Zeitpunkt t1, der um weniger als 10 ms vor dem Kollisionszeitpunkt liegt.

Durch Integration der gemessenen Relativgeschwindigkeit V lässt sich auch die Kurve 38 in Figur 4, die den Abstand zum Kollisionsobjekt angibt, über den Zeitpunkt t0 hinaus fortschreiben. Dies ermöglicht eine zunehmend genauere Vorhersage des wahren Kollisionszeitpunkts T_{c}. Bei der letzten Geschwindigkeitsmessung zum Zeitpunkt t1 brauchen die Relativgeschwindigkeit und der Abstand nur noch um weniger als 10 ms in die Zukunft extrapoliert zu werden, um den genauen Kollisionszeitpunkt T_{c} zu erhalten. Anhand der Kurve 34 in Figur 3 kann dann auch ein noch genauerer Wert für die Aufprallgeschwindigkeit V_{c} bestimmt werden. Auf diese Weise lässt sich die Konfiguration des Pre-Crash-Systems 20 wesentlich besser an die tatsächlichen Gegebenheiten anpassen.

## Patentansprüche

1. Radarsystem für Kraftfahrzeuge, mit einem Radarsensor (10) und einer Auswerteeinrichtung (12) zur Messung von Abständen (D) und Relativgeschwindigkeiten (V) von Objekten in der Umgebung des Fahrzeugs, und einer Kollisionserkennungseinrichtung (18), die anhand der gemessenen Abstände und Relativgeschwindigkeiten eine bevorstehende Kollision erkennt und Daten über den voraussichtlichen Kollisionszeitpunkt (T_{c}) und die Aufprallgeschwindigkeit (V_{c}) an ein Pre-Crash-System (20) liefert, **dadurch gekennzeichnet, daß** der Radarsensor (10) in seinem normalen Betriebsmodus (FMCW) als FMCW-Radar arbeitet und durch die Kollisionserkennungseinrichtung (18) in einen Geschwindigkeitsmeßmodus (CW) umschaltbar ist, in dem er als Doppler-Radar ohne Frequenzmodulation arbeitet, in dem die gesendete frequenz Amstant schalten wird und in dem eine genauere Messung der Relativgeschwindigkeit (V) als im normalen Betriebsmodus (FMCW) erfolgt.

2. Radarsystem nach Anspruch 1, **dadurch gekennzeichnet, daß** der Meßzyklus (T2) des Radarsensors (10) im Geschwindigkeitsmeßmodus (CW) kleiner ist als im normalen Betriebsmodus.

3. Radarsystem nach einem der vorstehenden Ansprüche, **gekennzeichnet durch** ein Berechnungsmodul (26), das im Geschwindigkeitsmeßmodus (CW) des Radarsensors anhand der gemessenen Relativgeschwindigkeiten (V) und anhand des vor der Umschaltung im normalen Betriebsmodus gemessenen Abstands (D) den voraussichtlichen Kollisionszeitpunkt (T_{c}) berechnet.

## Claims

1. Motor vehicle radar system, having a radar sensor (10) and an evaluation device (12) for measuring distances (D) and relative speeds (V) of objects in the surroundings of the vehicle, and a collision-detection device (18) which detects and imminent collision on the basis of the measured distances and relative speeds and supplies data relating to the anticipated collision time (T_{C}) and the impact speed (V_{C}) to a pre-crash system (20), **characterized in that** the radar sensor (10) operates as an FMCW radar in its normal operating mode (FMCW) and can be switched over by the collision-detection device (18) into a speed-measuring mode (CW), in which said radar sensor (10) operates as a Doppler radar without frequency modulation, in which the transmitted frequency is kept constant, and in which more precise measurement of the relative speed (V) than in the normal operating mode (FMCW) occurs.

2. Radar system according to Claim 1, **characterized in that** the measuring cycle (T2) of the radar sensor (10) is smaller in the speed-measuring mode (CW) than in the normal operating mode.

3. Radar system according to one of the preceding claims, **characterized by** a calculation module (26) which calculates the anticipated collision time (T_{C}) in the speed-measuring mode (CW) of the radar sensor on the basis of the measured relative speeds (V) and on the basis of the distance (D) measured before the switching over into the normal operating mode.

## Revendications

1. Système radar pour véhicules automobiles, comprenant un capteur radar (10) et un dispositif d'interprétation (12) pour mesurer les distances (D) et les vitesses relatives (V) d'objets dans l'environnement du véhicule, et un dispositif de détection de collision (18) qui, au moyen des distances et des vitesses relatives mesurées, détecte une collision imminente et délivre des données sur l'instant probable de la collision (T_{C}) et la vitesse de l'impact (V_{C}) à un système pré-collision (20), **caractérisé en ce que** le capteur radar (10), dans son mode de fonctionnement normal (FMCW), fonctionne comme un radar FMCW et peut être permuté par le dispositif de détection de collision (18) dans un mode de mesure de la vitesse (CW) dans lequel il fonctionne comme un radar Doppler sans modulation de fréquence, dans lequel la fréquence émise est maintenue constante et dans lequel une mesure de la vitesse relative (V) plus précise qu'en mode de fonctionnement normal (FMCW) a lieu.

2. Système radar selon la revendication 1, **caractérisé en ce que** le cycle de mesure (T2) du capteur radar (10) en mode de mesure de la vitesse (CW) est inférieur à celui dans le mode de fonctionnement normal.

3. Système radar selon l'une des revendications précédentes, **caractérisé par** un module de calcul (26) qui, en mode de mesure de la vitesse (CW) du capteur radar, calcule l'instant probable de la collision (T_{C}) au moyen des vitesses relatives (V) mesurées et au moyen de la distance (D) mesurée avant la permutation dans le mode de fonctionnement normal.
